# EUROPÄISCHE PATENTANMELDUNG

(11) **EP 3 029 087 A1**
(43) Veröffentlichungstag der Anmeldung: **08.06.2016**
(21) Anmeldenummer: 14196425.4
(22) Anmeldetag: 05.12.2014
(51) Int. Cl.: C08G 77/08, C08G 77/46

(54) **Verfahren zur Herstellung von niedrigviskosen Polyethersiloxanen**

(71) Anmelder: Evonik Degussa GmbH, 45128 Essen (DE)
(72) Erfinder: Ferenz, Michael, 45147 Essen (DE); Hofmann, Stephan, 41239 Mönchengladbach (DE); Dudzik, Horst, 45326 Essen (DE); Schiller, Carsten, 40885 Ratingen (DE)

(57) **Zusammenfassung**

Die Erfindung betrifft Verfahren zur Herstellung von niedrigviskosen Polyethersiloxanen bei welchen ungesättigte Polyether mit einem oder mehreren SiH-funktionellen Siloxanen in Gegenwart von Pt(0)-Verbindungen und tertiären Aminen umgesetzt werden. Die Erfindung betrifft weiterhin die Verwendung von Pt(0)-Verbindungen und tertiären Aminen zur Herstellung niedrigviskoser Polyethersiloxane und die Verwendung der so gewonnenen niedrigviskosen Polyethersiloxane.

## Beschreibung

Die Erfindung betrifft Verfahren zur Herstellung von niedrigviskosen Polyethersiloxanen bei welchem ungesättigte Polyether mit einem oder mehreren SiH-funktionellen Siloxanen in Gegenwart von Pt(0)-Verbindungen und tertiären Aminen umgesetzt werden. Die Erfindung betrifft weiterhin die Verwendung von Pt(0)-Verbindungen und tertiären Aminen zur Herstellung niedrigviskoser Polyethersiloxane und die Verwendung der so gewonnenen niedrigviskosen Polyethersiloxane.

Das Verfahren führt zu Polyethersiloxanen mit einer vergleichbar niedrigen Viskosität, da ein effektiver Weg gefunden werden konnte, bei welchem molgewichtsaufbauende Nebenreaktionen unterdrückt werden, was die Verarbeitung und die Handhabung des Polyethersiloxans vereinfacht. Polyethersiloxane kommen in einer Vielzahl technischer Prozesse zum Einsatz, zum Beispiel als Entschäumer in Kraftstoffen, als Additiv in Farben und Lacken oder als Bestandteil kosmetischer Formulierungen. Zudem eignen sie sich als Polyurethanschaum-Stabilisator. Eine Vielzahl von verschiedenen Polyethersiloxanen wird zum Beispiel unter dem Markennamen Abil® von der Firma Evonik Industries AG vertrieben.

Von besonderer Bedeutung sind Polyethersiloxane mit Polyetherresten, die über SiC-Funktionen an ein Siloxanrückgrad geknüpft sind. Sie lassen sich durch die Hydrosilylierung von Polyethern mit endständigen CC-Doppebindungen mit SiH-fuktionellen Siloxanen herstellen. CC-Doppelbindungshaltige Polyether lassen sich zum Beispiel durch die Alkoxylierung von Allylalkohol herstellen und werden als Allyloxypolyethyleneglykole vertrieben. Typische Vertreter dieser Stoffklasse werden beispielsweise mit Hilfe der CAS-Nummer: 27274-31-3, 9042-19-7 und 9041-33-2 beschrieben.

Die Herstellung von Polyethersiloxanen mittels Hydrosilylierung ist ein bekannter Prozess und wird vielfach in der Literatur beschrieben, zum Beispiel in der US 7157541 und US 2005/0075468. Als Katalysatoren für die Hydrosilylierung werden üblicherweise Platin-Verbindungen eingesetzt. In der betrieblichen Praxis haben sich hierfür Hexachloroplatinsäure und der Karstedt-Katalysator bzw. Formulierungen dieser Verbindungen durchgesetzt.

Die Hydrosilylierung wird von mehreren Nebenreaktionen begleitet. Zum einen kommt es in Gegenwart von OH-Funktionen zu einer dehydrogenativen Kopplung der OH-Gruppen tragenden Komponente und dem SiH-funktionellen Siloxan unter Bildung von SiOC-Funktionen. Zudem kommt es bei der Hydrosilylierung von Allyl-Gruppen-haltigen Verbindungen durch Umlagerungsund Abspaltungsreaktionen zur Bildung von Propionaldehyd. Propionaldehyd ist eine Komponente, die zu einem starken Eigengeruch von Polyethersiloxanen führen kann.

Zudem kann der frei werdende Aldehyd zu Verknüpfung von zwei Polyethersiloxan-Molekülen führen, indem er mit OH-Gruppen der Polyetherreste reagiert und diese über Acetalbrücken miteinander verbrückt.

Die Bildung von SiOC-Funktionen, Acetalbrücken und weiteren vernetzenden Reaktionen sind in der Regel unerwünscht, da sie zum Aufbau hochvernetzter Strukturen führen. Dies führt zu erhöhten Produktviskositäten, was die Verarbeitung der Polyethersiloxane deutlich erschwert und gegeben falls anwendungstechnische Ergebnisse verschlechtert. Je nach Ausmaß der Vernetzung kann es sogar zur Bildung von Gelen kommen.

Es gibt eine Vielzahl von Patenschriften, die sich mit der Unterdrückung dieser Nebenreaktionen beschäftigt.

US 4847398 (Union Carbide Corporation, 1989) beschreibt ein lösungsmittelfreies Verfahren zur Herstellung von Polyethersiloxanen in Gegenwart einer Carbonsäure oder eines Carbonsäuresalzes. Durch die Verwendung dieser Zusätze wird die Bildung von über Acetalgruppen verbrückte Polyethersiloxane unterdrückt. In den Beispielen von US 4847398 wird die Verwendung einer 3,3 %igen Lösung von H₂PtCl₆ in 1,2-Dimethoxyethan und Ethanol beschrieben (w (Pt) = 1,6 %). Die Konzentration der Hilfsstoffe liegt hier im Bereich von 200 bis 10 000 ppm.

EP 2463291 (Shin-Etsu, 2012) beschreibt die Hydrosilylierung in Gegenwart eines Carbonsäureamids, einer Mischung einer Nitril-Komponente und einer aromatischen HydroxyKomponente oder eines Carbonsäureamid salzes. Durch die Zusätze soll die Selektivität der Hydrosilylierung verbessert werden. Gemäß Lehre der EP2463291 wird von dem Einsatz tertiärer Amine abgeraten, da diese als Katalysatorgift wirken.

DE 102009027215 offenbart die Hydrosilylierung mit Pt(0)-Komplexen in Gegenwart von Amin-N-oxiden. Insbesondere bevorzugt sind hier Pt(0)-Katalysatoren mit einem Gehalt an Platin im Bereich 0,5 - 5 %.

EP 0032377 (Union Carbide, 1992) beschreibt Hydrosilylierungen unter Zusatz von sterisch gehinderten Aminen und Phosphinen. Als sterisch anspruchsvolle Amine gelten Amine, die zu mindestens einen Alkylrest besitzen, der ein sekundäres oder tertiäres Kohlenstoffatom aufweist, welcher direkt an den Aminstickstoff gebunden ist. Es wird weiterhin beschrieben, dass durch den Zusatz derartiger Amine Nebenreaktionen unterdrückt werden, ohne dass die Reaktivität von Platin-Katalysatoren vermindert wird. In einer Reihe nicht erfindungsgemäßer Beispiele wird gezeigt, dass verschiedene tertiäre Amine, wie Triethylamin, die Reaktivität des Platin-Katalysators deutlich verringern.

DE 102009027215 beschreibt die Hydrosilylierung von Olefinen mit SiH-Gruppe enthaltenden Verbindungen in Gegenwart von Pt(0)-Komplexverbindungen und mindestens einem Aminoxid. Die Herabsetzung der Katalysatoraktivität ist ein bislang ungelöstes Problem für den Fachmann. Auch die teilweise sehr hohe Viskosität der Hydrosilylierungsprodukte, die nicht zuletzt auch durch die lange Reaktionsdauer weniger aktiver Katalysatorsysteme hervorgerufen wird, konnte bislang nicht zufriedenstellend vermieden werden.

Aufgabe der vorliegenden Erfindung war es daher, Hydrosilylierungsverfahren mit Pt(0)-Verbindungen als Katalysator bereit zu stellen, bei denen die Katalysatoraktivität nicht herabgesetzt wird und somit schnelle Reaktion ermöglicht wird. Zudem war es Aufgabe der vorliegenden Erfindung ein Verfahren zur Herstellung niedrigviskoser Polyethersiloxane bereit zu stellen, die eine niedrige Viskosität aufweisen.

Überraschenderweise wurde gefunden, dass entgegen der allgemeinen Lehre, tertiäre Amine der allgemeinen Formel 1 bei der Hydrosilylierung ungesättigter Polyether mit SiH-funktionellen Siloxanen zugesetzt werden können, ohne dass sie die Hydrosilylierung verzögern oder sogar inhibieren. Gleichzeitig verhindern sie die Bildung von Acetalgruppen und ermöglichen so die Herstellung niedrigviskoser Polyethersiloxane (Formel 1) 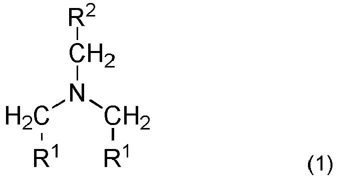 R¹ = R² oder unabhängig voneinander H oder ein Alkylrest mit 1 bis 14 Kohlenstoffatomen, bevorzugt R² oder H oder Alkylreste mit 1 bis 6 Kohlenstoffatomen, insbesondere bevorzugt Methyl, Ethyl oder R² und ganz besonders bevorzugt R²
R² = unabhängig voneinander Alkylreste mit 1 bis 14 Kohlenstoffatomen die gegebenenfalls mindestens eine OH-Gruppen tragen, bevorzugt Alkylreste mit 1 bis 14 Kohlenstoffatomen die eine
OH-Gruppe tragen, insbesondere bevorzugt -CH₂CH₂OH, -CH₂CH(CH₃)OH oder 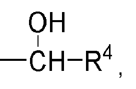 mit
R⁴ = unabhängig voneinander ein Kohlenwasserstoffrest mit 2 bis 12 Kohlenstoffatomen, bevorzugt Ethyl,
ganz besonders bevorzugt ist R² unabhängig voneinander -CH₂CH₂OH und/oder-CH₂CH(CH₃)OH.

Die zuvor genannten Amine der Formel 1 werden in nachfolgend beschriebenen erfindungsgemäßen Verfahren eingesetzt, und ermöglichen so die Herstellung niedrigviskoser Polyethersiloxane.

Eine besonders bevorzugte Ausführungsform des Amins der allgemeinen Formel 1 ist somit ein Amin der Formel 1a

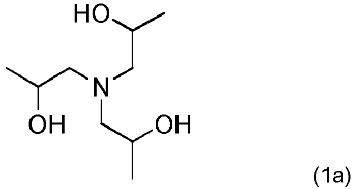

Der Einsatz von Aminen der Formel 1a ermöglicht eine besonders schnelle Umsetzung und führt zu Produkten mit deutlich niedrigerer Viskosität im Vergleich zu einem Verfahren ohne Einsatz von Aminen der Formel 1 mit sonst gleichen Bedingungen.

Gegenstand der vorliegenden Erfindung ist daher ein Verfahren zur Herstellung von niedrigviskosen Polyethersiloxanen, wobei
a) ein oder mehrere ungesättigte Polyether mit
b) einem oder mehreren SiH-funktionellen Siloxanen
   in Gegenwart von
c) Pt(0)-Verbindungen und
d) einem oder mehreren tertiären Aminen der allgemeinen Formel 1 in den Ausführungsformen wie vorab beschrieben
miteinander umgesetzt werden, wobei die bevorzugten Ausführungsformen der unter a), b) und c) bezeichneten Komponenten nachfolgend beschrieben werden. Erfindungsgemäße Verfahren führen zu Produktionsprozessen mit einer verbesserten Sicherheit, einer verbesserten Handhabbarkeit des Produktes sowie zu einer verbesserten Einarbeitbarkeit in verschiedenste technische Formulierungen.

Reaktionen von ungesättigten Polyethern a) mit SiH-funktionellen Siloxanen b) in Gegenwart von Pt(0)-Verbindungen c) sind dem Fachmann wie vorab beschrieben allgemein unter der Bezeichnung Hydrosilylierung bekannt, weswegen des Weiteren dieser Begriff auch auf erfindungsgemäße Verfahren angewendet wird.

Die erfindungsgemäßen Verfahren werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte angegeben, so handelt es sich, wenn nicht anders angegeben, um das Zahlenmittel. Werden nachfolgend Stoffeigenschaften, wie z. B. Viskositäten oder ähnliches angegeben, so handelt es sich, wenn nicht anders angegeben, um die Stoffeigenschaften gemessen bei 25 °C. Die Viskosität wird bei einer Temperatur von 25 °C mit einer Scherrate von 10 1/s mit einem MCR 301 Rheometer der Firma Anton Paar bestimmt.

In bevorzugten erfindungsgemäßen Verfahren werden 10 - 1000 ppm von einem oder mehreren tertiären Aminen der allgemeinen Formel 1 (Komponente c)) eingesetzt, insbesondere bevorzugt 100 - 500 ppm.

Es ist vorteilhaft, die Reaktionstemperatur während der erfindungsgemäßen Hydrosilylierung, im Bereich von 50 - 130 °C zu halten. Bevorzugt wird die Reaktionstemperatur im Bereich von 60-99 °C gehalten. "Während der Hydrosilylierung" bedeutet im Sinne dieser Anmeldung die Reaktionsphase bis zu der ein Umsatz der SiH-Gruppen von mindestens 90 % erreicht wird. Zum schnellen Erreichen eines höheren Endumsatzes der SiH-Gruppen kann es vorteilhaft sein die Reaktionstemperatur nach Erreichung eines Reaktionsumsatzes von größer als 90 % noch einmal zu erhöhen.

Geeignete einfach olefinisch ungesättigte Polyether der Komponente a) sind Polyether die eine terminale CC-Doppelbindung aufweisen. Sie können beispielsweise die Alkoxylierung von olefinisch ungesättigten Alkoholen, wie Allylalkohol, Methallylakohol , Hexenol, Glycerinmonoallylether, Eugenol oder Trimethylolpropanmonoallylether hergestellt werden.

Eine weitere Methode zur Herstellung von einfach olefinisch ungesättigten Polyethern ist die Alkoxilierung von gesättigten Alkoholen, gefolgt von der Allylierung der OH-Funktionalitäten. Bei dieser Methode kann sich, zum Beispiel durch den Einsatz von Propylenoxid, auch ein gewisser Anteil einer zweifach olefinisch ungesättigten Verbindungen bilden, indem sich Propylenoxid in Allyalkohol umlagert und der gebildete Allyl-funktionelle Polyether zusätzlich allyliert wird.

Einfach olefinisch ungesättgte Polyether im Sinne dieser Erfindung bedeutet, dass im numerischen statistischen Mittel jede Polyetherkette maximal 1,1 C-C-Doppelbindungen aufweist.

Bevorzugte Polyether sind Polyether der allgemeinen Formel II 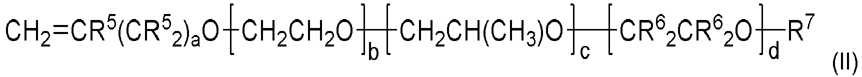 mit
a = 0 bis 12, bevorzugt 1 bis 8, besonders bevorzugt 1 bis 4,
b = 2 bis 100, bevorzugt 4 bis 50, besonders bevorzugt 5 bis 35,
c = 0 bis 100, bevorzugt 0 bis 50, besonders bevorzugt 2 bis 35,
d = 0 bis 40, bevorzugt 0 bis 20, besonders bevorzugt 0,
und mit der Maßgabe, dass b + c + d ≥3
wobei
R⁵ = gleiche oder verschiedene Kohlenwasserstoffreste mit 1 bis 8 Kohlenstoffatomen oder H, bevorzugt Methyl, Ethyl oder H, insbesondere bevorzugt H,
R⁶ = gleiche oder verschiedene Kohlenwasserstoffreste mit 1 bis 12 Kohlenstoffatomen oder H, bevorzugt Methyl, Ethyl, Phenyl oder H, bevorzugt sind mindestens 2, bevorzugt mindestens 3 Reste R⁶ H und die übrigen Reste R⁶ Ethyl oder Phenyl.
R⁷ = gleiche oder verschiedene Kohlenwasserstoffreste mit 1 bis 12 Kohlenstoffatomen oder C(O)Me oder H, bevorzugt Methyl, Butyl, -C(O)Me oder H.

Alkoxylierungen können auf verschiedene Art und Weisen durchgeführt werden. So handelt es sich zum Beispiel bei der alkalisch katalysierten Alkoxylierung um eine häufig angewendete Methode. Hier werden starke Basen, wie Natriummethylat, Kaliummethylat oder KOH als Katalysatoren, bzw. Initiatoren eingesetzt. Eine weitere mögliche Methode zur Herstellung geeigneter olefinisch ungesättigter Polyether ist die Alkoxylierung von olefinisch ungesättigten Alkoholen mit sogenannten Doppelmetallcyanid-Katalysatoren, wie sie zum Beispiel in EP 862947 beschrieben werden.

Die olefinisch ungesättigten Polyether können, je nachdem in welcher Art und Weise sie hergestellt oder aufgearbeitet werden eine Reihe von Nebenprodukten bzw. Nebenbestandteilen beinhalten. Wird zum Beispiel mit Natriummethylat gearbeitet, so kommt es durch die Alkoxylierung der Methylat-Gruppe zur Bildung von Polyethern mit einer Methylether-Funktion. Zudem können sie noch gewisse Gehalte an Alkalisalzen beinhalten, die sich aus dem Initiator bilden.

Häufig werden den Polyethern auch noch nach deren Herstellung Stabilisatoren oder andere Additive zugesetzt, wie zum Beispiel Phenol-Derivate, um eine Alterung der Produkte zu vermeiden.

Geeignete SiH-funktionelle Siloxane der Komponente b) sind Siloxane siliziumorganische Verbindungen mit ein oder mehreren SiH-Funktionen. Besonders geeignet sind Verbindungen der allgemeinen Formel III

MₑM'_{f}D_{g}D'ₕTᵢQⱼ (III)

| | | | |
|---|---|---|---|
| M | = [R⁸₃SiO_{1/2}] | M' | = [R⁸₂SiHO_{1/2}] |
| D | = [R⁸₂SiO_{2/2}] | D' | = [R⁸SiHO_{2/2}] |
| T | = [R⁸SiO_{3/2}] | Q | = [SiO_{4/2}] |

mit
e = 0 bis 10, bevorzugt 0 bis 2, besonders bevorzugt 2,
f = 0 bis 10, bevorzugt 0 bis 2, besonders bevorzugt 0,
g = 0 bis 500, bevorzugt 2 bis 300, insbesondere 5 bis 250,
h = 0 bis 100, bevorzugt 0 bis 50, insbesondere 0 bis 27,
i = 0 bis 10, bevorzugt 0 bis 5, insbesondere 0,
j = 0 bis 10, bevorzugt 0 bis 5, insbesondere 0,
mit der Maßgabe, dass e + f ≥ 2 und f + h ≥ 1, bevorzugt ≥ 2,
wobei
R⁸ = gleiche oder verschiedene Kohlenwasserstoffreste mit 1 bis 30 Kohlenstoffatomen, bevorzugt Methyl, Ethyl, Butyl oder Phenyl, besonders bevorzugt Methyl.

Die Beschreibung von Siloxanen mit M, D, T und Q-Einheiten ist ausführlich im Buch: Silicone Surfactants, Series: Surfactant Science, Published: July 13, 1999 by CRC Press, Editor:Randall M. Hill, Seite 8 beschrieben.

Es gibt verschiedene Möglichkeiten SiH-funktionelle Siloxane herzustellen. Durch die Art und Weise auf die SiH-funktionelle hergestellt werden kann es sein, dass sie verschiedene Nebenprodukte beinhalten. Neben Spuren aus Feuchtigkeit, Säuren, Salzen oder Lösemitteln kann das Siloxangerüst auch Funktionalitäten enthalten, die nicht in Formel y beschrieben sind. Durch hydrolytische Abspaltung von Wasserstoff kann es zum Beispiel zur Bildung von SiOH-Funktionen kommen. Weiterhin kann es möglich sein, dass im Produktionsprozess Alkohole eingesetzt werden. Diese können mit dem Siloxan unter Bildung von Silylakoxy-Funktionen reagieren.

Bevorzugte Katalysatoren sind Verbindungen, bei denen Platin in der Oxidationsstufe 0 vorliegt. Im Folgenden werden die Pt(0)-Verbindungen der der Komponente c) weiter beschrieben. In der Literatur ist eine Reihe von Platin-Katalysatoren beschrieben, bei denen es sich um Pt(0)-Komplexe handelt und die sich für die Hydrosilylierung ungesättigter Polyether mit SiH-funktionellen Siloxanen eignen. Verbreitet ist in der Industrie insbesondere der sogenannte Karstedt-Katalysator. Dabei handelt es sich um einen Pt(0)-Komplex, Ligand des Platin Atoms ist hier Tetramethyldivinyldisiloxane. Besonders bevorzugt werden Pt(0)-Verbindungen eingesetzt, die als Ligand des Platin Atoms Tetramethyldivinyldisiloxane tragen und/oder Pt(PPh₃)₄. Gegebenenfalls kann die verwendete Pt-Zubereitung in Spuren Platin-Verbindungen enthalten, die eine Oxidationsstufe ungleich von 0 besitzen. In Spuren bedeutet hierbei, dass weniger als 0,2 % der Zubereitung Pt-Atome mit einer Oxidationsstufe ungleich 0 sind. Bevorzugt ist der Massenanteil von Pt-Atomen mit einer Oxidationsstufe von ungleich 0 kleiner als 0,1 % beträgt. Der Platin-Katalysator kann in einem Lösemittel gelöst vorliegen. Zudem kann er in einer Flüssigkeit dispergiert sein. Geeignete Lösemittel sind zum Beispiel Polyether, Toluol oder Xylol.

### Hydrosilylierung:

Im Rahmen des Verfahrens zur Herstellung von niedrigviskosen Polyethersiloxanen werden einfach ungesättigte Polyether mit mehrfach SiH-funktionellen Siloxanen unter Zusatz Pt-Katalysatoren und erfindungsgemäßen Aminen der Formel I hydrosilyliert.

Dazu werden bevorzugt SiH-Siloxane mit einfach ungesättigten Polyethern, Pt(0)-Verbindungen, Amin der Formel I und gegebenenfalls weiteren Stoffen oder Stoffgemischen beispielsweise Lösemittel, in Kontakt gebracht.

Das erfindungsgemäße Verfahren kann auf verschiedene Art und Weisen durchgeführt werden. Es eignen sich sowohl kontinuierliche, semikontinuierliche als auch diskontinuierliche Produktionsverfahren.

Die Durchmischung der Edukte kann auf verschiedene Art und Weisen erfolgen. So ist es zum Beispiel möglich, mit verschiedensten Rühraggregaten zu rühren oder die Durchmischung durch eine Umpumpung der Edukte zu erreichen.

Die Umsetzung (Hydrosilylierung) wird bei Temperaturen von 30 - 150 °C durchgeführt. Dabei kann die Reaktionstemperatur während der Hydrosilylierung durch Kühlung oder Heizen geändert werden.

Polyether und SiH-Siloxane sind häufig nicht bzw. schlecht ineinander löslich. Daher entsteht bei einer Durchmischung derartiger Rohstoffe zunächst eine Emulsion. Nach der Zudosierung der Pt-Zubereitung startet die Reaktion und das Reaktionsgemisch klart auf. Die Zeit, die verstreicht, bis das Reaktionsgemisch klar ist, wird im Rahmen dieser Erfindung als Klarpunkt bezeichnet. Im Rahmen eines reproduzierbaren Verfahrens ist es von Vorteil, wenn der Klarpunkt möglichst schnell eintritt. Bei verzögerten Hydrosilylierungen kann es zu einer Selektion verschiedener Polyetherspezies am SiH-Siloxan kommen, da bevorzugt die Polyether reagieren, die am verträglichsten mit dem SiH-Siloxan sind. Verstreicht viel Zeit bis zum Erreichen des Klarpunktes können äußere Parameter, wie zum Beispiel die Intensität der Rührung zunehmend an Einfluss auf die Produktqualität gewinnen.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

Ein weiterer Gegenstand der vorliegenden Erfindung ist die Verwendung von Pt(0)-Verbindungen und einem oder mehreren tertiären Aminen der allgemeinen Formel 1 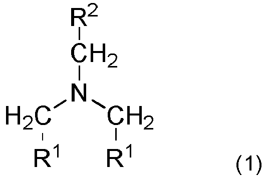 mit
R¹ = R² oder unabhängig voneinander H oder ein Alkylrest mit 2 bis 14 Kohlenstoffatomen,
R² = Alkylreste mit 1 bis 14 Kohlenstoffatomen die mindestens eine OH-Gruppen tragen,
zur Herstellung von niedrigviskosen Polyethersiloxanen, bevorzugt aus einem oder mehreren ungesättigten Polyethern mit einem oder mehreren SiH-funktionellen Siloxanen. Für die bevorzugt verwendeten Pt(0)-Verbindungen, mehreren tertiären Aminen der allgemeinen Formel 1, ungesättigte Polyether und SiH-funktionellen Siloxane gelten die zuvor bevorzugt angeführten Ausführungsformen. Insbesondere bevorzugt sind die Reste R² der Amine der allgemeinen Formel 1 ausgewählt aus -CH₂CH₂OH und/oder -CH₂CH(CH₃)OH.

Ein weiterer Gegenstand der vorliegenden Erfindung ist die Verwendung von niedrigviskosen Polyethersiloxanen, bevorzugt hergestellt nach einem erfindungsgemäßen Verfahren, als Entschäumer, als Polyurethanschaum-Stabilisator oder in Personal Care Produkten.

### Beispiele:

Bestimmung der Viskosität:

Die Viskosität der Proben wurde mit Hilfe des Viskosimeteres HAAKE Viscotester 550 bestimmt.

Es wurde mit der Messeinrichtung DIN 53019 gearbeitet.

### Bestimmung von t (Klar):

Bei Eintopfreaktionen, bei denen die Edukte nach dem Mischen eine milchige Emulsion bilden, wurde die Zeit t (Klar) gemessen. Dabei handelt es sich um die Zeitdifferenz zwischen der Zugabe der Pt-Zubereitung und dem Zeitpunkt, nach dem das Reaktionsgemisch transparent wurde. Je kleiner der Wert für t (Klar) ist, umso höher ist die Reaktivität des Systems einzuschätzen, da das Reaktionssystem erst nach einem bestimmten Umsatz aufklart.

### Versuchsreihe 1:

### Allgemeine Herstellung eines Polyethersiloxans mit Hilfe von Amin-Zusätzen

In einem 500 mL-Dreihalskolben mit Thermometer, Rückflußkühler und KPG-Rüher wurden 100 g eines SiH-funktionellen Siloxanes der allgemeinen Formel [Me₂SiHO_{1/2}]₂ [Me₂SiO_{2/2}]₆₂[MeSiHO_{2/2}]₆ mit 241 g eines Polyethers der allgemeinenFormel CH₂=CHCH₂O[CH₂CH₂O]₁₃[CH₂CH(CH₃)O]₁₃H versetzt. Es wurden jeweils 0,17 g eines Amins zugesetzt (siehe Tabelle 1).Die Mischung wurde gerührt und auf 90 °C erhitzt. Anschließend wurde das Reaktionsgemisch mit 0,17 g einer toluolischen Lösung des Karstedt-Katalysators (w (Pt) = 2 %) zugesetzt. Es wurde eine exotherme Reaktion beobachtet. Die Mischung wurde zwei Stunden lang gerührt. Es wurde eine gelbliche klare, einphasige Flüssigkeit erhalten.

| Versuchsnummer | Aminzusatz | t (Klar) | Viskosität |
|---|---|---|---|
| 1 (Vergleichsbeispiel) | - | 10 min | 1350 mPa s |
| 2 (Vergleichsbeispiel) | 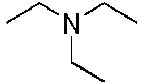 | 40 min | 1450 mPa s |
| 3 (erfindungsgemäß) | 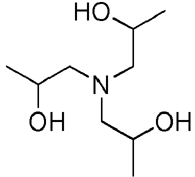 | 10 min | 1220 mPa s |
| 4 (Vergleichsbeispiel) | 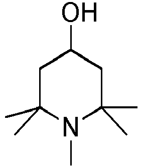 | 10 min | 1320 mPas |

Wie in EP2463291 beschrieben zeigt sich, dass Triethylamin die Reaktion stark verlangsamt, wodurch höherviskose Produkte gebildet werden (Versuchsnummer 2). HALS-Amine verlangsamen die Reaktion nicht führen jedoch nur zu einer geringen Verringerung der Viskosität durch die Unterdrückung der Nebenreaktionen (Versuchsnummer 4). Werden jedoch erfindungsgemäße Amine zugesetzt, so erhält man deutlich niedrigviskosere Produkte (Versuchsnummer 3). Zudem wird die Geschwindigkeit der Reaktion nicht verringert.

## Patentansprüche

1. Verfahren zur Herstellung von niedrigviskosen Polyethersiloxanen, **dadurch gekennzeichnet, dass**
a) ein oder mehrere ungesättigte Polyether mit
b) einem oder mehreren SiH-funktionellen Siloxanen in Gegenwart von
c) Pt(0)-Verbindungen und
d) einem oder mehreren tertiären Aminen der allgemeinen Formel 1 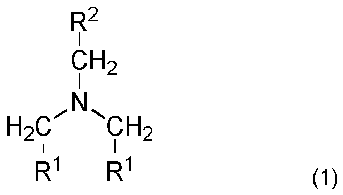 mit
R¹ = R² oder unabhängig voneinander H oder ein Alkylrest mit 2 bis 14 Kohlenstoffatomen,
R² = Alkylreste mit 1 bis 14 Kohlenstoffatomen die mindestens eine OH-Gruppen tragen, miteinander umgesetzt werden.

2. Verfahren nach Anspruch 1 **dadurch gekennzeichnet, dass** R² der Amine der allgemeinen Formel 1 Alkylreste mit 1 bis 14 Kohlenstoffatomen sind, die je genau eine OH-Gruppe tragen.

3. Verfahren nach einem der Ansprüche 1 oder 2 **dadurch gekennzeichnet, dass** die Reste R¹ der Amine der allgemeinen Formel 1 R² entsprechen.

4. Verfahren nach einem der Ansprüche 1 bis 3 **dadurch gekennzeichnet, dass** die Reste R² der Amine der allgemeinen Formel 1 ausgewählt sind aus -CH₂CH₂OH und/oder - CH₂CH(CH₃)OH.

5. Verfahren nach einem der Ansprüche 1 bis 4 **dadurch gekennzeichnet, dass** die ungesättigten Polyether der Komponente a) Polyether der allgemeinen Formel II 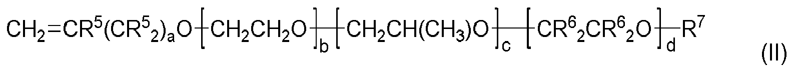 mit
a = 0 bis 12, bevorzugt 1 bis 8, besonders bevorzugt 1 bis 4,
b = 2 bis 100, bevorzugt 4 bis 50, besonders bevorzugt 5 bis 35, c = 0 bis 100, bevorzugt 0 bis 50, besonders bevorzugt 2 bis 35,
d = 0 bis 40, bevorzugt 0 bis 20, besonders bevorzugt 0,
und mit der Maßgabe, dass b + c + d ≥3
wobei
R⁵ = gleiche oder verschiedene Kohlenwasserstoffreste mit 1 bis 8 Kohlenstoffatomen oder H, bevorzugt Methyl, Ethyl oder H, insbesondere bevorzugt H,
R⁶ = gleiche oder verschiedene Kohlenwasserstoffreste mit 1 bis 12 Kohlenstoffatomen oder H, bevorzugt Methyl, Ethyl, Phenyl oder H, bevorzugt sind mindestens 2, bevorzugt mindestens 3 Reste R⁶ H und die übrigen Reste R⁶ Ethyl oder Phenyl.
R⁷ = gleiche oder verschiedene Kohlenwasserstoffreste mit 1 bis 12 Kohlenstoffatomen oder C(O)Me oder H, bevorzugt Methyl, Butyl, -C(O)Me oder H
sind.

6. Verfahren nach einem der Ansprüche 1 bis 5 **dadurch gekennzeichnet, dass** die SiH-funktionellen Siloxanen der Komponente b) Siloxane der allgemeinen Formel III
MₑM'_{f}D_{g}D'ₕTᵢQⱼ (III)
mit
M = [R⁸₃SiO_{1/2}] M' = [R⁸₂SiHO_{1/2}]
D= [R⁸₂SiO_{2/2}] D' = [R⁸SiHO_{2/2}]
T = [R⁸SiO_{3/2}] Q = [SiO_{4/2}]
und
e = 0 bis 10, bevorzugt 0 bis 2, besonders bevorzugt 2,
f = 0 bis 10, bevorzugt 0 bis 2, besonders bevorzugt 0,
g = 0 bis 500, bevorzugt 2 bis 300, insbesondere 5 bis 250,
h = 0 bis 100, bevorzugt 0 bis 50, insbesondere 0 bis 27,
i = 0 bis 10, bevorzugt 0 bis 5, insbesondere 0,
j = 0 bis 10, bevorzugt 0 bis 5, insbesondere 0,
mit der Maßgabe, dass e + f ≥2 und f + h ≥ 1, bevorzugt ≥ 2,
wobei
R⁸ = gleiche oder verschiedene Kohlenwasserstoffreste mit 1 bis 30 Kohlenstoffatomen, bevorzugt Methyl, Ethyl, Butyl oder Phenyl, besonders bevorzugt Methyl sind.

7. Verfahren nach einem der Ansprüche 1 bis 6 **dadurch gekennzeichnet, dass** als Komponente c) Pt(0)-Verbindungen, die als Ligand des Platin Atoms Tetramethyldivinyldisiloxane tragen, oder Pt(PPh₃)₄ eingesetzt werden.

8. Verwendung von Pt(0)-Verbindungen und einem oder mehreren tertiären Aminen der allgemeinen Formel 1 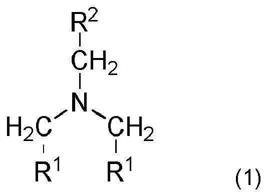 mit
R¹ = R² oder unabhängig voneinander H oder ein Alkylrest mit 2 bis 14 Kohlenstoffatomen, R² = Alkylreste mit 1 bis 14 Kohlenstoffatomen die mindestens eine OH-Gruppen tragen, zur Herstellung von niedrigviskosen Polyethersiloxanen.

9. Verwendung nach Anspruch 8 **dadurch gekennzeichnet, dass** die Reste R² der Amine der allgemeinen Formel 1 ausgewählt sind aus -CH₂CH₂OH und/oder -CH₂CH(CH₃)OH.

10. Verwendung von niedrigviskosen Polyethersiloxanen, hergestellt nach einem Verfahren nach einem der Ansprüche 1 bis 7, als Entschäumer, als Polyurethanschaum-Stabilisator oder in Personal Care Produkten.
